Europäisches Patentamt

(19) European Patent Office

Office européen des brevets

(11) Numéro de publication: **0 101 997**
**A1**

(12) **DEMANDE DE BREVET EUROPEEN**

(21) Numéro de dépôt: **83107844.9**

(22) Date de dépôt: **09.08.83**

(51) Int. Cl.³: **G 01 B 11/06**

(30) Priorité: **12.08.82 FR 8214035**

(43) Date de publication de la demande:
**07.03.84 Bulletin 84/10**

(84) Etats contractants désignés:
**AT BE CH DE FR GB IT LI LU NL SE**

(71) Demandeur: **COMPAGNIE INDUSTRIELLE DES TELECOMMUNICATIONS CIT-ALCATEL S.A. dite:**
**12, rue de la Baume**
**F-75008 Paris(FR)**

(72) Inventeur: **Canteloup, Jean**
**18, allée des Pommiers**
**F-91310 Montlhery(FR)**

(74) Mandataire: **Weinmiller, Jürgen et al,**
**Zeppelinstrasse 63**
**D-8000 München 80(DE)**

(54) Dispositif de mesure de l'épaisseur d'une couche déposée sur un substrat transparent.

(57) Dispositif pour la mesure de l'épaisseur d'une couche (4A) déposée sur un substrat transparent (4B), le matériau de la couche ayant une loi d'absorption lumineuse du type exponentiel, caractérisé en ce qu'il comprend
- une source (1) de lumière monochromatique,
- un séparateur (2) de lumière partageant le faisceau émis par la source en deux parties, une première partie envoyée sur un premier convertisseur opto-électronique (4) fournissant en sortie un premier signal électrique envoyé sur un premier amplificateur logarithmique, une seconde partie envoyée normalement à l'échantillon, le faisceau transmis étant reçu sur un second convertisseur opto-électronique (5) fournissant en sortie un second signal électrique envoyé sur un second amplificateur logarithmique, les sorties des deux amplificateurs étant reliées à l'entrée d'un circuit soustracteur fournissant en sortie un signal proportionnel à la différence entre le signal de sortie du second amplificateur logarithmique et le signal de sortie du premier amplificateur logarithmique, cette différence étant représentative de l'épaisseur de l'échantillon.

FIG. 1

Dispositif de mesure de l'épaisseur d'une couche déposée sur un substrat transparent

La présente invention concerne un dispositif opto-électronique de mesure de l'épaisseur d'une couche mince d'un matériau déposé sur un substrat transparent.

Le dispositif est fondé sur l'absorption, par le matériau d'un rayonnement lumineux et s'applique aux matériaux pour lesquels il existe une loi d'absorption lumineuse du type

It = Ito exp ( - a e) (Loi de Beer-Lambert) où :

Ito = est l'intensité lumineuse envoyée normalement sur l'échantillon

It = est l'intensité lumineuse transmise

e = l'épaisseur de l'échantillon

a = le coefficient d'absoption de l'échantillon.

L'épaisseur e est alors égale à 1/a Log (Ito / It).

Un but de l'invention est de réaliser un dispositif optique de mesure de l'épaisseur d'un échantillon qui fournisse directement une valeur de l'épaisseur.

Un autre but de l'invention est de réaliser un dispositif optique de mesure dont le résultat soit insensible aux fluctuations éventuelles de l'intensité de la source lumineuse utilisée.

L'invention a pour objet un dispositif pour la mesure de l'épaisseur d'une couche déposée sur un substrat transparent, le matériau de la couche ayant une loi d'absorption lumineuse du type exponentiel, caractérisé en ce qu'il comprend

- une source de lumière monochromatique,

- un séparateur de lumière partageant le faisceau émis par la source en deux parties, une première partie envoyée sur un premier convertisseur opto-électronique fournissant en sortie un premier signal électrique envoyé sur un premier amplificateur logarithmique, une seconde partie envoyée normalement à l'échantillon, le faisceau transmis étant reçu sur un second convertisseur opto-électronique fournissant en sortie un second signal électrique envoyé sur un second amplificateur logarithmique, les sorties des deux amplificateurs étant reliées à l'entrée d'un circuit soustracteur fournissant en sortie un signal proportionnel à la différence entre le signal de sortie du second amplificateur logarithmique et le signal de sortie du premier amplificateur logarithmique, cette différence étant représentative de l'épaisseur de l'échantillon.

L'invention sera bien comprise par la description donnée ci-après d'un mode préféré de réalisation de l'invention en référence au dessin annexé dans lequel :

- la figure 1 est un schéma de la partie optique du dispositif de mesure de l'invention,

- la figure 2 est un schéma de la partie électronique du dispositif de mesure de l'invention,

- la figure 3 est un schéma d'une installation faisant application du dispositif de l'invention pour le contrôle de l'épaisseur d'une couche déposée sur un film,

- la figure 4 est un schéma détaillé d'un mode préféré de réalisation de la partie électronique de l'installation de la figure 3.

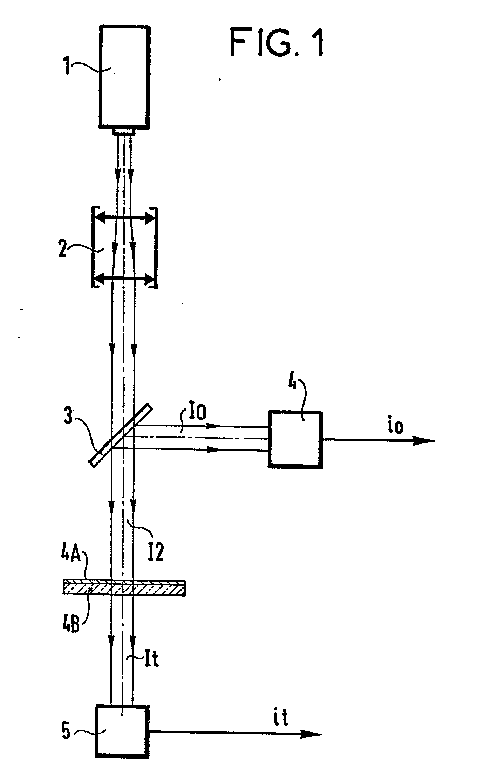

Dans la figure 1, la référence 1 désigne une source de lumière monochromatique telle qu'un laser hélium-néon. La largeur du faisceau lumineux est ajustée au moyen d'un expanseur 2. Un séparateur 3, par exemple une mince lame de verre semi-réfléchissante, sépare le faisceau lumineux en deux parties. Une première partie du faisceau lumineux, d'intensité Io, est envoyée sur un premier convertisseur opto-électronique linéaire 4 qui peut être une photodiode.

Ce convertisseur fournit en sortie un signal électrique io = S2 Io, ou S2 est un coefficient de proportionnalité.

Une seconde partie du faisceau lumineux d'intensité I2 traverse l'échantillon comprenant, sur un substrat transparent 4B, une couche 4A dont on veut mesurer l'épaisseur ; le faisceau lumineux issu de l'échantillon, d'intensité It, est envoyé sur un second convertisseur opto-électronique linéaire 5 du même type que le convertisseur 4. Il fournit en sortie un signal électrique it = S1 It, où S1 est un coefficient de proportionnalité.

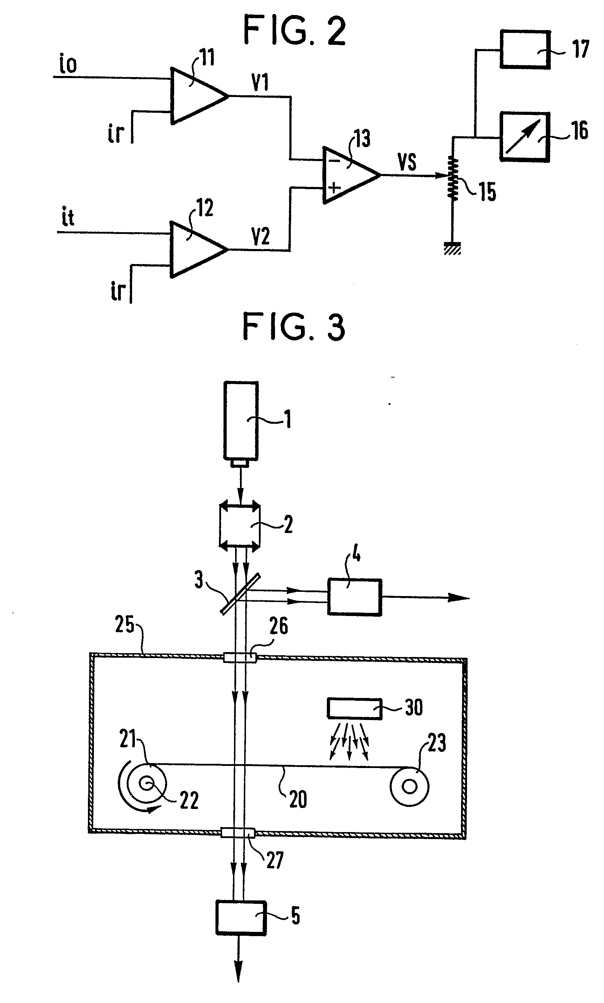

La figure 2 représente un schéma par blocs du circuit électronique faisant partie du dispositif de mesure de l'invention.

Les signaux io et it sont reçus sur des amplificateurs opérationnels (respectivement 11 et 12) effectuant le logarithme des signaux d'entrée, à une constante additive près. Les signaux de sortie V1 et V2 des amplificateurs 11 et 12 sont liés par les relations :

$$V1 = K1 \text{ Log } (S1 \, It/ir) + A1$$

$$V2 = K2 \text{ Log } (S2 \, Io/ir) + A2$$

où K1, K2 sont des coefficients de proportionnalité égaux à une même valeur K si les amplificateurs 11 et 12 sont identiques,

ir est le courant commun de référence appliqué aux amplificateurs 11 et 12,

A1 et A2 sont les valeurs d'off set des deux amplificateurs 11 et 12.

Les amplificateurs logarithmiques sont attaqués en courant, ce qui leur permet d'être linéaire sur six décades à 0,1% près, par exemple de 1 mA à 1nA.

Les sorties des amplificateurs logarithmiques 11 et 12 sont envoyés à un circuit soustracteur 13 qui fournit en sortie un signal

$$VS = V1 - V2 = K \text{ Log } (S2 \, Io/S1 \, It) + A1 - A2$$
$$= K \text{ Log } \frac{Io}{It} + A$$

où A est une autre constante.

Un potentiomètre de sortie 15 permet d'alimenter un organe d'affichage 16 directement gradué en unité de longueur. Le tarage est fait de manière connue avec un échantillon étalon.

Lorsque le dispositif est utilisé dans une installation de gravure de circuits électroniques par attaque de plasma, un circuit à seuil 17, recevant une valeur de consigne, fournit un signal de fin d'attaque, lorsque l'épaisseur recherchée est obtenue.

Le dispositif de l'invention présente divers avantages :

- le résultat de la mesure est indépendant des fluctuations de la source lumineuse,

- le choix d'amplificateurs logarithmiques permet d'obtenir une linéarité de la réponse au signaux d'entrées sur une vaste échelle s'étendant sur 6 décades,

- le temps de réponse est très faible, de l'ordre de la milliseconde,

- l'emploi d'un laser associé à un expanseur permet de focaliser le

faisceau à la surface de l'échantillon avec une grande souplesse associée à une grande précision.

L'invention s'applique avantageusement au contrôle de l'épaisseur d'une couche déposée sur un film.

A titre d'exemple, le matériau de la couche est du titane déposé sur un film de polytéréphtalate d'éthylène-glycol.

La couche doit avoir par exemple une épaisseur de 400 angströms.

La figure 3 montre, très schématiquement, l'installation.

On reconnaît le laser 1, l'expanseur de faisceau 2, le séparateur 3, le premier convertisseur opto-électronique 4.

Le film 20 est tendue entre une bobine réceptrice 21 entraînée par un moteur 22 et une bobine débitrice 23.

L'ensemble est placée dans une enceinte étanche sous vide 25, comprenant deux hublots 26 et 27 se faisant face. Le faisceau lumineux incident traverse le hublot 26, le film 20, le hublot 27 et est reçu par le convertisseur 5.

Un dispositif 30 de dépôt sous vide de type connu pulvérise une couche de titane sur le film.

La constance de l'épaisseur est assurée par exemple par un réglage permanent de la vitesse de déroulement du film, tous les autres paramètres étant maintenus constants.

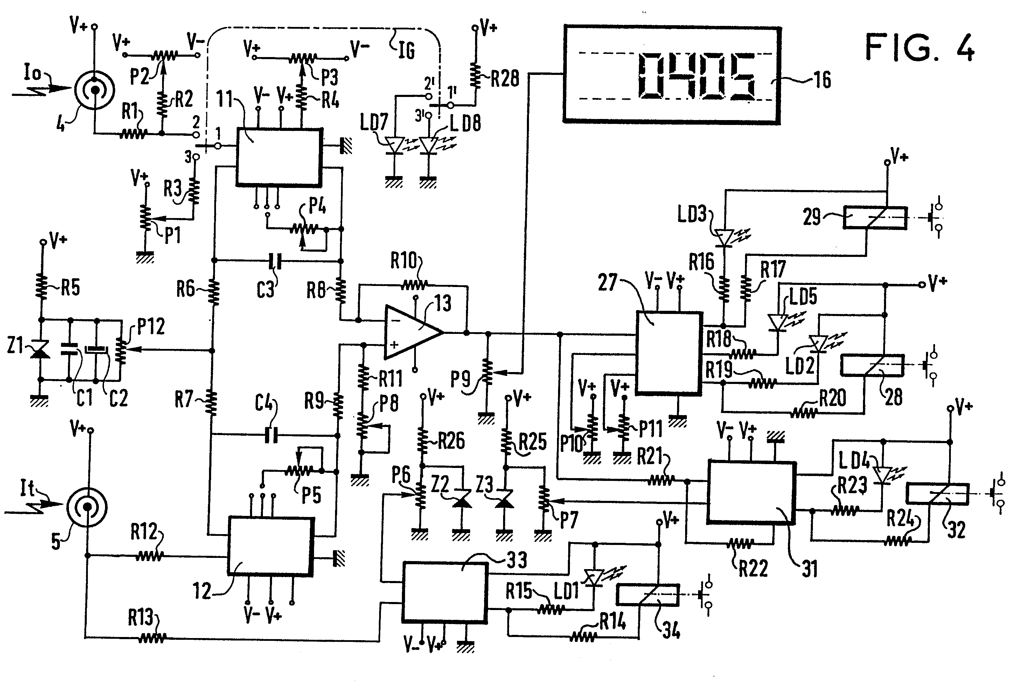

Un mode détaillé de réalisation du circuit électonique correspondant est donné dans la figure 4. Les références communes aux figures 1 à 4 ont reçu le même numéro de référence.

On distingue dans la figure 4 les deux convertisseurs 4 et 5 recevant les flux lumineux Io et It. Les amplificateurs logarithmiques 11 et 12 sont des circuits LOG 100 BURR - BROWN. La référence courant est donné par le circuit Z1, C1, C2, P12, R6, R7, avec les significations suivantes des lettres : C = condensateur, R = résistance, Z = diode Zener, P potentiomètre.

Ces symboles se retrouvent dans la suite avec également :

LD = Led (diode électroluminescente)

RL = relais

$V^+$, $V^-$ tensions continues de commande des circuits.

Le circuit P1, R3 comprend un interrupteur IG avec indications visuelles par les diodes LD7 (verte) et LD8 (rouge).

Le circuit d'affichage à diodes 7 segments est symbolisé par le rectangle 16.

Le circuit 27 est un comparateur à deux seuils, l'un inférieur (390 angströms par exemple) commandant un relais 28 qui ferme un circuit d'accélération du moteur, l'autre supérieur (410 angströms) commandant un relais 29 qui ferme un circuit de ralentissement du moteur.

Le circuit 31 est un circuit comparateur réglé avec un seuil très élevé, détectant la fin du déroulement de la bande qui porte à cet effet, à son extrémité, une portion rendue opaque.

Le circuit 31 commande un relais 32 dont le fonctionnement provoque un arrêt de l'installation.

Le circuit 33 est un comparateur réglé à un seuil bas permettant de contrôler le fonctionnement du laser et recevant en entrée le signal du convertisseur 5. Il commande un relais de protection de l'installation en cas de défaillance du laser.

L'application qui vient d'être décrite n'est qu'un exemple.

L'invention s'applique pour toutes sortes de contrôle d'épaisseurs de couches, en dépôt comme en gravure, toutes les fois que la couche peut être traversée par un rayon lumineux.

REVENDICATION

Dispositif pour la mesure de l'épaisseur d'une couche (4A) déposée sur un substrat transparent (4B), le matériau de la couche ayant une loi d'absorption lumineuse du type exponentiel, caractérisé en ce qu'il comprend

- une source (1) de lumière monochromatique,

- un séparateur (2) de lumière partageant le faisceau émis par la source en deux parties, une première partie envoyée sur un premier convertisseur opto-électronique (4) fournissant en sortie un premier signal électrique envoyé sur un premier amplificateur logarithmique, une seconde partie envoyée normalement à l'échantillon, le faisceau transmis étant reçu sur un second convertisseur opto-électronique (5) fournissant en sortie un second signal électrique envoyé sur un second amplificateur logarithmique, les sorties des deux amplificateurs étant reliées à l'entrée d'un circuit soustracteur fournissant en sortie un signal proportionnel à la différence entre le signal de sortie du second amplificateur logarithmique et le signal de sortie du premier amplificateur logarithmique, cette différence étant représentative de l'épaisseur de l'échantillon.

FIG. 1

0101997

FIG. 2

FIG. 3

FIG. 4

0101997

Office européen
des brevets

**RAPPORT DE RECHERCHE EUROPEENNE**

EP   83 10 7844

| | **DOCUMENTS CONSIDERES COMME PERTINENTS** | | |
|---|---|---|---|
| Catégorie | Citation du document avec indication, en cas de besoin, des parties pertinentes | Revendication concernée | CLASSEMENT DE LA DEMANDE (Int. Cl. ³) |
| A | FR-A-2 356 191 (LEYBOLD-HERAEUS) * Figure 1 * | 1 | G 01 B   11/06 |
| A | US-A-3 743 429   (SHIKAWAI) * Figure  2;  colonne  7, lignes 10-22 * | | |

| DOMAINES TECHNIQUES RECHERCHES (Int. Cl. ³) |
|---|
| G 01 B |

Le présent rapport de recherche a été établi pour toutes les revendications

| Lieu de la recherche LA HAYE | Date d'achèvement de la recherche 25-10-1983 | Examinateur MIELKE W |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

       & : membre de la même famille, document correspondant

OEB Form 1503. 03.82